# EUROPEAN PATENT SPECIFICATION

(11) **EP 1 098 287 B1**
(45) Date of publication and mention of the grant of the patent: **25.08.2004**
(21) Application number: 99203725.9
(22) Date of filing: 08.11.1999
(51) Int. Cl.: G08G 1/0968

(54) **Vehicle route planning method**
Routenplannungsverfahren für Fahrzeug
Procédé de planification de l'itinéraire d'un véhicule

(43) Date of publication of application: 09.05.2001
(73) Proprietor: Siemens Aktiengesellschaft, 80333 München (DE)
(72) Inventor: Völkel, Andreas, 35576 Wetzlar (DE)

(56) References cited:
- EP-A- 0 697 686
- WO-A-94/11839
- US-A- 5 523 765
- US-A- 5 919 246
- PATENT ABSTRACTS OF JAPAN vol. 1999, no. 14, 22 December 1999 (1999-12-22) & JP 11 258794 A (HITACHI CHEM CO LTD), 24 September 1999 (1999-09-24)
- PATENT ABSTRACTS OF JAPAN vol. 1997, no. 03, 31 March 1997 (1997-03-31) & JP 08 315290 A (AQUEOUS RES:KK), 29 November 1996 (1996-11-29)
- PATENT ABSTRACTS OF JAPAN vol. 1996, no. 01, 31 January 1996 (1996-01-31) & JP 07 243859 A (SUMITOMO ELECTRIC IND LTD), 19 September 1995 (1995-09-19)

## Description

The invention relates to method for vehicle route planning providing destination setting for use in a navigation system. Such a method is known e.g. from patent publication W096/11380.

In the navigation system disclosed therein the method after being initiated at the start or change of a travel event, uses the current local position to determine a target position being derived automatically according to probability aspects by means of stored travel information from the past. A route to this target position is being determined and travel tips for this route provided by a traffic computer disposed outside the vehicle are being displayed for the driver.

It is an object of the invention to improve the known method in offering to the driver a simple destination selection option for the user.

It is another object of the invention to enhance the presentation of the information provided by the system to the user.

A method for vehicle route planning providing destination setting in a navigation system is therefore characterized by storing in a memory at respective destination storage positions thereof, position coordinate data relating to destination locations, by attributing at least the starting time and date of travel events to the relevant destination location being stored in time storage means, and by selecting at an initiating start of a travel event various destinations from the destination locations stored in the memory on the basis of said attributed starting time and date of travel events exceeding a certain predetermined destination occurrence probability factor.

By applying these measures, a list of preferred destinations is being provided to the user at the initiation of the operation performing the method, limited to those destinations which in view of the starting time and date and the number of previous travel events having the same destination are most relevant to the user at the moment of initiation. The limited list allows the user to quickly select and input the destination wanted by a simple cursor operation.

Preferably, said method according to the invention is characterized by attributing to each destination location a set of coordinate data relating to origin locations being starting points of travel events to said each destination location, the criteria used to select destinations to be displayed being based on the attributed origin locations.

This measure allows to increase the reliability in the relevancy of the destinations selected to be displayed by taking into account the origin location at the moment of the user's initiation of the method.

A further increase in relevancy of destinations to be displayed without losing relevant information is made possible by classifying the date at the start of said travel event and the date attributed to each destination into categories of seasons, fortnights and weekdays.

This can be further refined by classifying the time of the day at the start of said travel event attributed to each destination into categories of hours.

Another preferred method according to the invention is characterized by allocating a weighting factor to each category of the destinations reflecting the degree in time and/or location proximity of the attributed starting point within the category with respect to said initiating start. The weighting factors allow to simply determine the relevancy of the destinations in view of the time and location of at the initiating start of the operation performing the method according to the invention.

By a predetermined combination of weighting factors into one value on a scale of priority reflecting the probability of destination in view of the origin location and the starting time and date of a travel event, said determination of relevancy said may be further simplified.

In displaying the destinations preferably a ranking thereof is applied according to said priority scale value.

In order for the user to manually input new destinations or delete obsolete ones, the method provides an option for the user to store addresses into an address book at compliance with a predetermined address profile, respectively by an option to erase destination locations.

To limit the storage memory needed without losing relevant information, the method is preferably characterized by first in first out storage of data.

The above and other objects, features and advantages of the present invention will become more apparent from the following description referring to the accompanying drawings, in which a preferred embodiment of the present invention is shown by way of illustrative example, wherein like reference characters refer to like elements.
Figure 1 illustrate a functional dataword structure stored in an address book memory for use in a method according to the invention;
Figure 2a-e are proximity weighting curves for defining a weighting factor to be assigned to a destination based on the proximity of its attributed origin time and location with regard to the actual origin time and location for various categories;
Figure 3a-c are a flowcharts illustrative for an operation performing the method according to the invention;

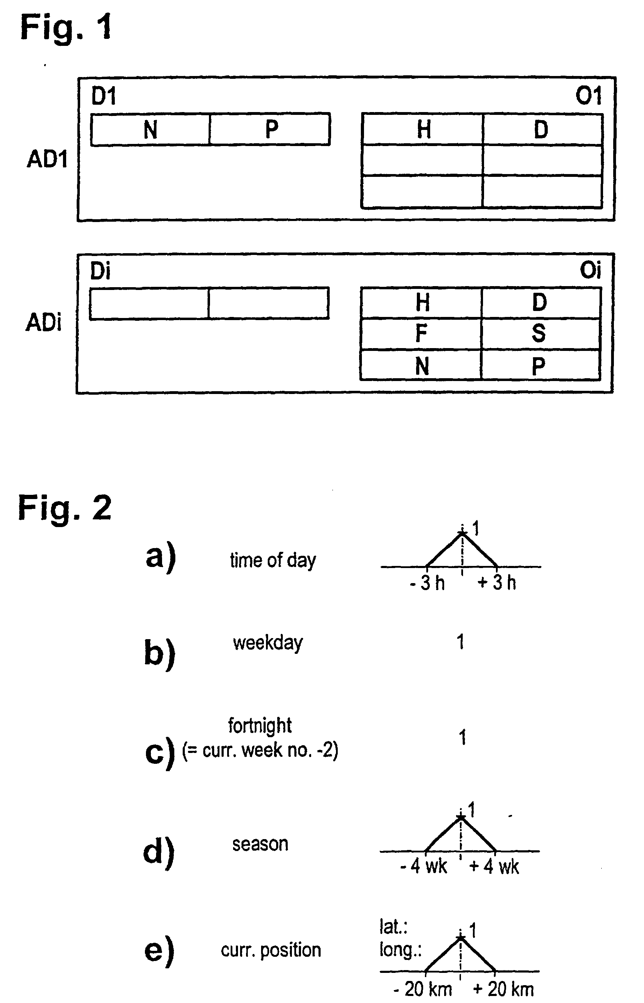

Figure 1 illustrates the dataword storage structure of an addressbook memory for use in a method according to the invention. The memory at a memory address AD1 is provided with a destination name storage location D1N for storing therein the name and address (street, housenumber, city, state) of a first destination and a destination position storage location D1P for storing therein the position in geographical coordinates of said first destination. The destination storage locations D1N and D1P are linked to origin data storage means O1, provided with time data storage means H, D, F and S and location data storage means N and P, for storing therein respectively the origin time and location data, attributed to said first destination, categorized into the hour of the start of the travel event, ending in said first destination, the day in the week (Monday, Tuesday, etc), the number of fortnight (i.e. the weeknumber divided by two), the season (spring, summer, etc.), the location name and address (street, housenumber, city, state) and the position in geographical coordinates at said start.

Similar dataword storage structures of the addressbook memory are provided for every destination to be stored: e.g. at a memory address ADi, the memory is provided with a destination name storage location DiN for storing therein the name and address (street, housenumber, city, state) of a destination i and a destination position storage location DiP for storing therein the position in geographical coordinates of said destination i. The destination storage locations D2N and D2P are linked to an origin data storage means Oi, provided with time data storage means H, D, F and S and location data storage means N and P, for storing therein respectively the origin time and location data, attributed to said destination i, categorized into the hour of the start of the travel event, ending in said destination, the day in the week (Monday, Tuesday, etc), the number of fortnight (i.e. the weeknumber divided by two), the season (spring, summer, etc.), the location name and address (street, housenumber, city, state) and the position in geographical coordinates at said start.

Figure 2a-e are proximity weighting curves for defining a weighting factor to be assigned to a destination based on the proximity of its attributed origin time and location with regard to the actual origin time and location for the respective hour, weekday, fortnight, season and geographical position categories.

An initiation of an operation performing the method according to the invention is followed by an entry of the time and location data of the vehicle navigation system at the moment of initiating, i.e. the actual time and location origin data. These actual time and location origin data are compared with the time and origin data attributed to the destinations previously stored the addressbook memory.
Figure 2a shows that a weighting factor 1 is assigned to D1 for the hour category, if the actual origin time coincides with the origin time attributed to the first destination D1. This weighting factor decreases when the origin time attributed to the first destination D1 deviates from the actual origin time, i.e. at a decrease in the time proximity between the actual and the attributed origin times. In the example given, the weighting factor decreases linearly from 1 to 0 at a linear decrease in proximity within an interval of three hours preceding and following the point of coincidence.
Figure 2b show that a weighting factor 1 is assigned to D1 for the day category, when the actual origin day coincides with the origin day attributed to the first destination D1. Any other day will result in a weighting factor 0.
Likewise, it is shown in Figure 2c, that a weighting factor 1 is assigned to D1 for the fortnight category, when the actual origin time coincides in terms of fortnights with the origin time attributed to the first destination D1. Any difference in fortnight will result in a weighting factor 0.
Figure 2d shows that a weighting factor 1 is assigned to D1 for the season category, if the season of the actual origin time coincides with the season of the origin time attributed to the first destination D1. This weighting factor decreases when the origin season attributed to the first destination D1 deviates from the actual origin season, i.e. at a decrease in the time proximity between the actual and the attributed origin times. In the example given, the weighting factor decreases linearly from 1 to 0 at a linear decrease in proximity within an interval of four weeks preceding and following the season of coincidence.
Figure 2e shows that a weighting factor 1 is assigned to D1 for the position category, if the position of the actual origin time coincides with the position of the origin time attributed to the first destination D1. This weighting factor decreases when the origin position attributed to the first destination D1 deviates from the actual origin position, i.e. at a decrease in the position proximity between the actual and the attributed origin locations. In the example given, the weighting factor decreases linearly from 1 to 0 at a linear decrease in position proximity within a distance radius of 20 kilometers around the position of coincidence.

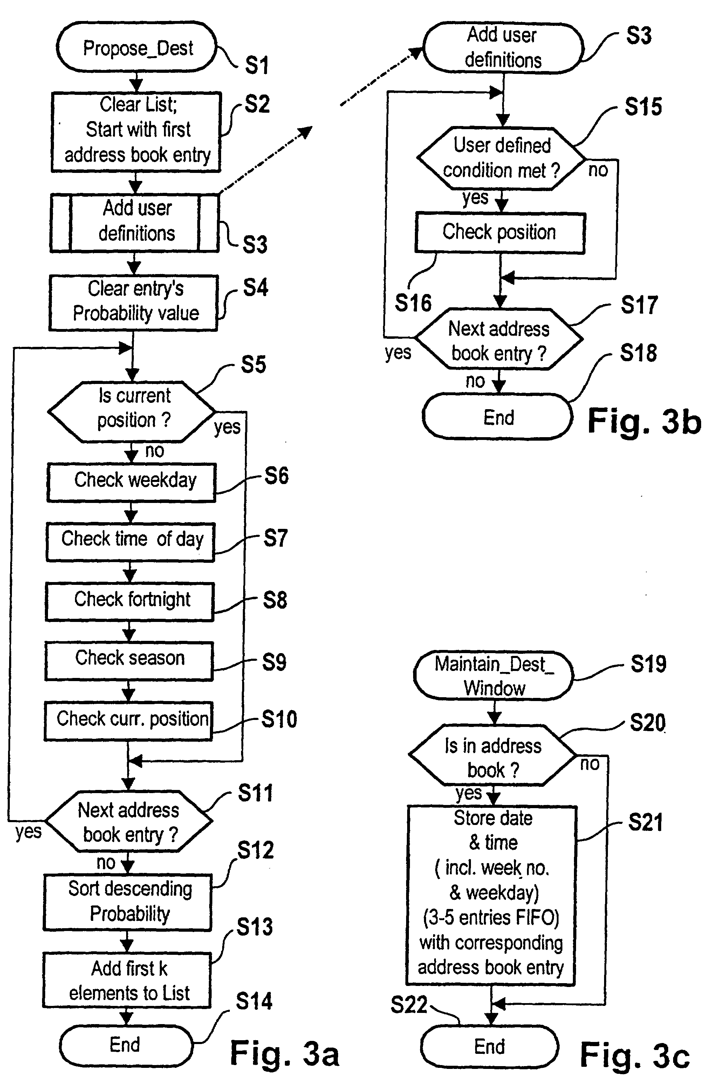

Figure 3a is a flowchart illustrative for the method for vehicle route planning providing destination setting in a navigation system according to the invention. The method provides for building up and using a data base of destinations or addressbook, in which destinations are being stored in an addressbook memory at respective destination storage positions or memory addresses thereof, having attributed thereto the relevant origin time and location classified into categories of season, fortnight, day and hour, respectively geographical position coordinates and weighting factors being allocated to each category. These data are stored in time, respectively location storage means linked to the destination storage locations of the addressbook. The method includes a selection of destinations to be presented to the user from the destinations stored in the addressbook memory on the basis of criteria related to number of travel events within a predetermined time period for displaying the same.

An operation performing the method is initiated in step S1 at the start of a trip, automatically upon ignition of the vehicle's motor or upon manual switching on by the user. In step S2, the origin data, i.e. the date, time and location coordinates of the vehicle at the start of a trip or travel event are automatically measured, stored and attributed to the destination entered into the addressbook of a navigation system by the user. In the building up phase of the destination database, the addressbook contains no data and the user is to enter a destination by typing in the full name and/or the geographical position coordinates of the destination or by clicking a cursor on the location of a wanted destination pictured on a displayed map. Eventual alternative destinations are cleared from the display screen. In step S3 the user may enter a destination profile (if any). The processing of this destination profile will be clarified with reference to Figure 3b. In step S4 the entry's weighting values assigned previously to the stored destination are cleared to enable an update thereof. In step S5 the actual or current origin location is compared with the location of the destination stored at an activated first memory address. If both locations coincide the method skips steps S6-S10 to continue with step S11 where a second memory address is activated, followed in step S5 again with a comparison between the actual or current origin location on the one hand and the location of the destination stored at the now activated second memory address on the other hand.

If the actual or current origin location deviates from the location of the destination stored at the first memory address, then in steps S6 to S10 weighting factors are assigned to the destination at this first memory address for the respective hour, day, fortnight, season and position categories as explained here above with reference to Figure2 a-e. This assignment of weighting factors is carried out for all destinations stored in the address book memory, whereafter step S12 is activated. Step 12 provides, per each destination, for a predetermined combination of weighting factors into one single value (e.g. representing the sum or other linear combination of the weighting factors defined for the various categories), the socalled destination occurrence probability factor. This so obtained single weighting factor value is used to rank the destinations to be represented to the user on a scale of priority, reflecting the probability of the user's destination in view of the origin location and the starting time and date of a travel event.

Other selection criteria for a (ranked) presentation of relevant destinations may well be used without departing from the invention. For example, instead of using one combined weighting factor value per each destination, the selection and ranking of destination locations to be displayed may be based on a comparison of weighting factors per each category.

Figure 3b shows a possibility to refine the selection of destinations to be displayed based on a destination profile entered into the navigation system by the user. Such destination profile may be used to tailor the selection of destinations to the user's specific needs, e.g. fastfood restaurant, etc. Eventually, the user may have the attributed origin time of the destinations to be displayed ignored.
After initiation and user's entry of the destination profile in step S3, a destination at a first memory address is checked on this profile in step S15. When it matches the profile, a weighting factor based on position is defined in step S16, whereafter a similar processing is carried out on the destination at a second memory address, etc.. After completion of this loop the destinations may be represented to the user in step S18 in a ranking based on said weighting factors.

Figure 3c shows the data storage management in a navigation system using the above method according to the invention allowing for an efficient use of memory capacity.

In contrast to the above known method, the method according to the invention is not necessarily limited to the use thereof in off-board navigation systems and may well be applied in on-board navigation systems. The method is also not limited to a statical determination of destination and may be applied to obtain a dynamical destination tracking. Furthermore, the user may enter data into the system through an audible input of data using speech recognition.

## Claims

1. Method for vehicle route planning providing destination setting in a navigation system using probability aspects of stored travel event information from the past, **characterized by** storing in a memory at respective destination storage positions thereof, position coordinate data relating to destination locations, by attributing at least the starting time and date of travel events to the relevant destination location being stored in time storage means, and by selecting at an initiating start of a travel event various destinations from the destination locations stored in the memory on the basis of said attributed starting time and date of travel events exceeding a certain predetermined occurrence probability factor for displaying the same.

2. Method according to claim 1, **characterized by** attributing to each destination location a set of coordinate data relating to origin locations being starting points of travel events to said each destination location, the criteria used to select destinations to be displayed being based on the attributed origin locations.

3. Method according to one of claims 1 or 2, **characterized by** classifying the date at the start of said travel event and the date attributed to each destination into categories of seasons, fortnights and weekdays.

4. Method according to one of claims 1 to 3, **characterized by** classifying the time of the day at the start of said travel event attributed to each destination into categories of hours.

5. Method according to one of claims 3 or 4, **characterized by** allocating a weighting factor to each category of the destinations reflecting the degree in time and/or location proximity of the attributed starting point within the category with respect to said initiating start.

6. Method according to one of claim 5, **characterized by** a predetermined combination of weighting factors into one value on a scale of priority reflecting the probability of destination in view of the origin location and the starting time and date of a travel event.

7. Method according to one of claims 1 to 6, **characterized by** first in first out storage of data spanning a fixed storage capacity.

8. Method according to one of claim 7, **characterized by** ranking the destination location selected to be displayed according to said priority scale value.

9. Method according to one of claims 1 to 8, **characterized by** an entry of addresses into an address book at compliance with a predetermined address profile.

10. Method according to one of claims 1 to 9, **characterized by** an erase of origin locations from the destination locations.

11. Method according to one of claims 1 to 10, **characterized by** the use thereof in an on-board navigation system.

12. Method according to one of claims 1 to 11, **characterized by** the use thereof in a dynamical destination tracking.

13. Method according to one of claims 1 to 12, **characterized by** an audible entry of data using speech recognition.

## Patentansprüche

1. Verfahren zur Fahrzeugroutenplanung mit Zieleinstellung in einem Navigationssystem unter Verwendung von Wahrscheinlichkeitsaspekten gespeicherter Reiseereignisinformationen aus der Vergangenheit, **gekennzeichnet durch** Speichern von mit Zielorten zusammenhängenden Positionskoordinatendaten in einem Speicher an jeweiligen Zielspeicherpositionen des Speichers, **durch** Zuordnen mindestens des Startzeit- und Reisedatumereignisses zu dem relevanten Zielort, die in Zeitspeichermitteln gespeichert werden, und **durch** Auswählen verschiedener Ziele aus den in dem Speicher gespeicherten Zielorten auf der Basis des Überschreitens eines bestimmten vorbestimmten Auftretwahrscheinlichkeitsfaktors **durch** das zugeordnete Startzeit- und Reisedatumereignis an einem einleitenden Start eines Reiseereignisses zur Anzeige dieser.

2. Verfahren nach Anspruch 1, **dadurch gekennzeichnet, daß** jedem Zielort ein Satz Koordinatendaten, der mit Ursprungsorten zusammenhängt, die Startpunkte von Reiseereignissen zu jedem besagten Zielort sind, wobei die Kriterien für die Auswahl von anzuzeigenden Zielen auf auf den zugeordneten Ursprungsorten basieren.

3. Verfahren nach einem der Ansprüche 1 oder 2, **gekennzeichnet durch** Klassifizieren des Datums am Start des Reiseereignisses und des jedem Ziel zugeordneten Datums in Kategorien von Jahreszeiten, Zeiträumen von zwei Wochen und Wochentagen.

4. Verfahren nach einem der Ansprüche 1 bis 3, **gekennzeichnet durch** Klassifizieren der Tageszeit am Start des Reiseereignisses, die jedem Ziel zugeordnet wird, in Kategorien von Stunden.

5. Verfahren nach einem der Ansprüche 3 oder 4, **gekennzeichnet durch** Zuteilen eines Gewichtungsfaktors zu jeder Kategorie der Ziele, der den Grad an zeitlicher und/oder Ortsnähe des zugeordneten Startpunkts in der Kategorie in bezug auf den einleitenden Start wiedergibt.

6. Verfahren nach Anspruch 5, **gekennzeichnet durch** eine vorbestimmte Kombination von Gewichtungsfaktoren zu einem Wert auf einer Prioritätsskala, der die Zielwahrscheinlichkeit in Hinblick auf den Ursprungsort und die Startzeit und das Datum eines Reiseereignisses wiedergibt.

7. Verfahren nach einem der Ansprüche 1 bis 6, **gekennzeichnet durch** eine FIFO-Speicherung von Daten, die eine feste Speicherkapazität überspannen.

8. Verfahren nach Anspruch 7, **gekennzeichnet durch** Einstufung des ausgewählten anzuzeigenden Zielorts gemäß dem Prioritätsskalenwert.

9. Verfahren nach einem der Ansprüche 1 bis 8, **gekennzeichnet durch** einen Eintrag von Adressen in ein Adreßbuch in Entsprechung mit einem vorbestimmten Adressenprofil.

10. Verfahren nach einem der Ansprüche 1 bis 9, **gekennzeichnet durch** ein Löschen von Ursprungsorten aus den Zielorten.

11. Verfahren nach einem der Ansprüche 1 bis 10, **gekennzeichnet durch** seine Verwendung in einem On-Board-Navigationssystem.

12. Verfahren nach einem der Ansprüche 1 bis 11, **gekennzeichnet durch** seine Verwendung bei einer dynamischen Zielverfolgung.

13. Verfahren nach einem der Ansprüche 1 bis 12, **gekennzeichnet durch** einen hörbaren Eintrag von Daten unter Verwendung von Spracherkennung.

## Revendications

1. Procédé de planification de l'itinéraire d'un véhicule offrant un réglage de destination dans un système de navigation utilisant des aspects de probabilité d'informations d'événements de voyage mémorisées à partir du passé, **caractérisé par** la mémorisation dans une mémoire à des positions de mémorisation de destinations respectives de celles-ci, de données de coordonnées de positions relatives à des lieux de destination, en attribuant au moins l'heure et la date de départ d'événements du voyage au lieu de destination pertinent étant mémorisé dans des moyens de mémorisation de l'heure, et en sélectionnant, lors d'un départ servant de déclencheur d'un événement du voyage, différentes destinations parmi les lieux de destinations mémorisées dans la mémoire sur la base desdites heures et dates de départ attribuées d'événements du voyage dépassant un certain facteur de probabilité d'apparition prédéterminé pour l'affichage de celui-ci.

2. Procédé selon la revendication 1, **caractérisé par** l'attribution à chaque lieu de destination d'un jeu de données de coordonnées relatives à des lieux d'origine servant de points de départ d'événements du voyage pour ledit chaque lieu de destination, les critères utilisés pour sélectionner les destinations devant être affichées étant basés sur les lieux d'origine attribués.

3. Procédé selon l'une des revendications 1 ou 2, **caractérisé par** le classement par catégories de saisons, de quinzaines et de jours de la semaine de la date de départ dudit événement de voyage et de la date attribuée à chaque destination.

4. Procédé selon l'une des revendications 1 à 3, **caractérisé par** le classement par catégories horaires de l'heure du jour au départ dudit événement de voyage attribué à chaque destination.

5. Procédé selon l'une des revendications 3 ou 4, **caractérisé par** l'attribution d'un facteur de pondération à chaque catégorie de destinations reflétant le degré de proximité horaire et/ou de lieu du point de départ attribué à l'intérieur de la catégorie par rapport audit départ servant de déclencheur.

6. Procédé selon la revendication 5, **caractérisé par** une combinaison prédéterminée de facteurs de pondération dans une valeur sur une échelle de priorité reflétant la probabilité de destination compte tenu du lieu d'origine et de l'heure et de la date de départ d'un événement de voyage.

7. Procédé selon l'une des revendications 1 à 6, **caractérisé par** une mémorisation des données du type premier entré, premier sorti couvrant une capacité de mémorisation fixe.

8. Procédé selon la revendication 7, **caractérisé par** le classement du lieu de destination sélectionné à afficher selon ladite valeur d'échelle de priorité.

9. Procédé selon l'une des revendications 1 à 8, **caractérisé par** l'entrée d'adresses dans un carnet d'adresses conformément à un profil d'adresses prédéterminé.

10. Procédé selon l'une des revendications 1 à 9, **caractérisé par** un effacement des lieux d'origine à partir des lieux de destination.

11. Procédé selon l'une des revendications 1 à 10, **caractérisé par** l'utilisation de celles-ci dans un système de navigation embarqué.

12. Procédé selon l'une des revendications 1 à 11, **caractérisé par** l'utilisation de celles-ci dans un système de localisation de destination dynamique.

13. Procédé selon l'une des revendications 1 à 12, **caractérisé par** une entrée audible de données utilisant la reconnaissance vocale.
